# EUROPEAN PATENT SPECIFICATION

(11) **EP 2 670 787 B1**
(45) Date of publication and mention of the grant of the patent: **05.08.2015**
(21) Application number: 12700708.6
(22) Date of filing: 23.01.2012
(51) Int. Cl.: C08G 63/66, C11D 3/00

(54) **SOIL RELEASE POLYMERS**
SCHMUTZLÖSENDE POLYMERE
POLYMÈRES ANTISALISSURES

(30) Priority: 31.01.2011 EP 11152784; 31.01.2011 EP 11152785
(43) Date of publication of application: 11.12.2013
(73) Proprietor: Unilever PLC, London EC4Y 0DY (GB); Unilever N.V., 3013 AL Rotterdam (NL)
(72) Inventor: CROSSMAN, Martin, Charles, Wirral Merseyside CH63 3JW (GB); JARVIS, Adam, Peter, Wirral Merseyside CH63 3JW (GB); ROGERS, Susanne, Henning, Wirral Merseyside CH63 3JW (GB); WINTER, Jeremy, Nicholas, Wirral Merseyside CH63 3JW (GB)
(74) Representative: Newbould, Frazer Anthony
(86) International application number: PCT/EP2012/050941
(87) International publication number: WO 2012/104156

(56) References cited:
- EP-A2- 0 185 427
- EP-A2- 0 220 156

## Description

### TECHNICAL FIELD

This invention relates to improved soil release polymers which may be incorporated into alkaline liquid detergent compositions to assist with cleaning of oily soils from fabrics, particularly fabrics comprising polyester.

### BACKGROUND

US4411831 (Purex) relates to inclusion of soil release polymer (SRP) in a liquid detergent composition. It has as its object to provide a liquid detergent having soil-release properties and which is stable from separation and precipitation for extended periods of time. The stable aqueous detergent composition consists essentially of (by weight): 0.2 to 20.0% of an ethylene terephthalate/polyethylene oxide terephthalate copolymer; 5 to 40% of specific anionic detergent; Up to 40% of specific nonionic detergent; and a buffer sufficient to maintain the pH of the aqueous composition within the range of 5.0 to 9.0. The preferred soil-release polymers for these liquids are said to be: Zelcon 4780 (DuPont) and Milease T (ICI Americas). It is taught that when formulating the liquids one must protect against high pH or the development of a high pH upon storage. This is because the soil-release agents used will hydrolyze in the alkaline range. For these polymers the hydrolysis is said to become objectionable when the pH begins to exceed 8.5 and it can be a real problem above 9.0.

These types of polyester SRPs have, since then, been developed considerably to improve their performance, especially in powdered compositions. More recent SRPs are, for example, described generally in EP991743 (Clariant) and EP2135931 (Procter & Gamble).

EP311342 (P&G) is concerned with end capped esters that are soil release agents which are product compatible with alkaline granular detergent compositions. The esters, which comprise asymmetrically substituted oxy-1,2-alkyleneoxy units and terephthaloyl units are sulphoaroyl end-capped. Polymers with charged end caps like these are generally unsuitable for liquid compositions.

One line of development for soil release polymers (or more accurately oligomers) has been to make them of low molecular weight. In this specification the term polymer is used for both polymers and oligomers irrespective of molecular weight. We have found that while such low molecular weight polymers have excellent performance in powder compositions the low molecular weight seems to have increased their susceptibility to loss of performance via alkaline hydrolysis when included in alkaline liquid detergents. Thus although the SRP exemplified in WO2009/153184 has excellent performance in a freshly made concentrated liquid detergent composition according to that invention, we have now determined that the resistance of the SRP to hydrolysis on storage in the detergent liquid at pH from 7.5 to 9.0 (and consequential loss of soil release performance) is insufficient for a robust commercial detergent liquid. As such an alkaline pH is useful for boosting the performance of the surfactants and other ingredients it is highly desirable to find a new polymer with better storage stability at alkaline pH. The inclusion of Triethanolamine (TEA) in the composition makes matters worse as it appears to catalyse the cleavage of ester bonds present in the SRP. Thus stability of the known SRP is insufficient even at neutral pH if TEA is incorporated as part of the buffer system of the detergent liquid.

The approach taken in WO2009/153184 is to dose a main wash surfactant at low levels so that the in wash surfactant level is lower than normal. What would be the consequential unsatisfactory wash performance resulting from the low in wash surfactant levels, is boosted by inclusion of high levels of specific polymers and enzymes in the liquid. One of the key polymers that are preferably included at high levels in the composition is a polyester SRP. The one used in the examples of WO2009/153184, and also one of the three preferred on page 39, is of polyester chemistry (terephthalic acid/propandiol copolymer with methoxy PEG 750 end cap). It is sold under the trade name Texcare® SRN 170 by Clariant. It is now thought that this material is substantially linear.

Despite attempts to reformulate the concentrated detergent liquids described in WO2009/153184, to eliminate TEA from the composition we have been unable to achieve that for a viable 20ml dose concentrated laundry detergent liquid. Thus, it is necessary to find a new SRP that is resistant to hydrolysis under moderately alkaline conditions, especially in the presence of TEA, and yet retains the excellent soil release properties of Texcare® SRN170.

WO 2006/133868 & WO 2006/133867 (Clariant) describe oligoesters of the type that would include Texcare® SRN170. The general formula is:

R¹-(O-R²)ₐ-[OC(O)R³C(O)(OR⁴)_{b}]_{c}-O-C(O)R⁵-C(O)O-(R⁶-O)_{d}-R⁷

While R² and R⁶ may be alkylene, such as ethylene, propylene, butylene; ethylene is preferred and there is no disclosure of used of mixed alkylene oxides as end caps.

The use of 1,2, propane diol in the polymer backbone, as found in Texcare® SRN 170, is described in many publications, for example, in EP 629690 (P&G). It is also found in the earlier EP 185427 (P&G) where it is said to confer improved polymer solubility when used in place of ethylene glycol in the backbone. EP 185427 contains some general teaching about modification of the end groups away from the preferred capped EO repeat units. The examples are in line with the general preference to use 100% EO repeat units, with a cap of a lower alkyl group.

The generic expression for the polymeric soil release agents of EP185427 is:

X-[(OCH₂CH₂)ₙ(OR⁵)ₘ]-[(A-R¹-A-R²)ᵤ(A-R³-A-R²)ᵥ]-A-R⁴-A=[(R⁵O)ₘ(CH₂CH₂O)ₙ]-X

In this formula, the moiety [(A-R¹-A-R²)ᵤ(A-R³-A-R²)ᵥ]-A-R⁴-A- forms the backbone. Groups X-[(OCH₂CH₂)ₙ(OR⁵)ₘ] and [(R⁵O)ₘ (CH₂CH₂O)ₙ]-X are generally connected at the ends of the backbone.

In the backbone, the moieties A are preferably ester moieties. R¹ moieties are essentially 1,4-phenylene moieties. R² moieties are essentially ethylene moieties, or substituted ethylene moieties having C₁-C₄ alkyl or alkoxy substituents. Suitable ethylene or substituted ethylene moieties include ethylene, 1,2-propylene, 1,2-butylene, 1,2-hexylerie, 3-methoxy-1,2-propylene and mixtures thereof. Preferably, the R² moieties are essentially ethylene moieties, 1,2-propylene moieties or mixtures thereof. Inclusion of a greater percentage of ethylene moieties tends to improve the soil release activity of the compounds. Inclusion of a greater percentage of 1,2-propylene moieties tends to improve the water solubility of the compounds. Preferred R³ moieties are those which are substituted 1,3-phenylene moieties. The R⁴ moieties are R¹ or R³ moieties, or mixtures thereof.

The moieties -(R⁵O)- and -(CH₂CH₂O)- of the end caps [(R⁵O)ₘ(CH₂CH₂O)ₙ] and [(OCH₂CH₂)ₙ(OR⁵)ₘ] can be mixed together or preferably form blocks of -(R⁵O)-and - (CH₂CH₂O)- moieties. Preferably, the blocks of -(R⁵O)- moieties are located next to the backbone. When R⁵ is the moiety -R²-A-R⁶-, m is 1; also, the moiety-R²-A-R⁶- is preferably located next to the backbone of the compound.

For R⁵, the preferred C₃-C₄ alkylene is C₃H₆ (propylene); when R⁵ is C₃-C₄ alkylene, m is preferably from 0 to 5 and is most preferably 0. R⁶ is preferably methylene or 1,4-phenylene.

The moiety -(CH₂CH₂O)- preferably comprises at least 75% by weight of the moiety [(R⁵O)ₘ(CH₂CH₂O)ₙ] and most preferably 100% by weight (m is 0). X can be H, C₁-C₄ alkyl or 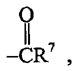 wherein R⁷ is C₁-C₄ alkyl. X is preferably methyl or ethyl, and most preferably methyl.

The value for each n is at least 6, but is preferably at least 10. The value for each n usually ranges from 12 to 113. Typically, the value for each n is in the range of from 12 to 43.

It is taught in EP185427, both in the general disclosure and from the examples that the preferred polymers do not have the group R⁵O present.

Similar disclosures are made in EP 199403 and EP 629690 and more recently it is repeated in EP 2 135 931.

EP 1 661 933 (Sasol) describe amphiphilic non-ionic oligoesters that have soil release properties after storage in alkaline detergent liquid.

In the exemplary formulae a PO block of up to 10, but preferably 2 to 4 may be adjacent to the mid block. The tested material has 4 PO. The mid block is essentially 1,4- phenylene and 1,2 propylidene. No mention is made of forming a mid block using 2,3 butane diol or other diols that result in two alkyl substituents on an ethylene backbone.

Despite the large volume of prior art disclosures of soil release polymers based on polyester there remains a need for a polymer, or polymers that combine resistance to hydrolysis in alkaline liquids with good soil release performance on polyester fabrics.

### SUMMARY OF THE INVENTION

According to a first aspect of the present invention thereis provided a linear soil release polymer with the formula (I):

X-[(EO)_{q}-block-(PO)ₚ]-[(A-R¹-A-R²)ₙ]-A-R¹-A-[(PO)ₚ-block-(EO)_{q}] -X (I)

where the linking moieties A are esters,
where the R¹ moieties are 1,4 - phenylene moities ,
where the R² moieties are substituted ethylene moieties having C₁₋₄ alkyl substituents and the R² moieties comprise substituted ethylene moieties derived from the condensation of 2,3 butane diol,
where the EO blocks are 100% ethylene oxide (CH₂CH₂O),
where the PO blocks are 100% propylene oxide (CH₂CH(CH₃)O),
where p is a number from 2 to 50, preferably from 5 to 45, more preferably from 6 to 40, yet more preferably from 7 to 40 and most preferably from 8 to 40, even from 11 to 35;
where q is a number from 6 to 120, preferably 18 to 80, most preferably 40 to 70, provided that q is greater than p and preferably q is at least 1.5 times as large as p;
where X is a suitable capping moiety, preferably selected from C₁₋₄ alkyl, branched and unbranched;
where n is a number from 2 to 16.

Because it is an average n is not necessarily a whole number for the polymer in bulk. The same holds true, to a lesser extent, for p and q. Since p and q are made by anionic polymerisation routes (resulting in polymer blocks with very discreet block lengths) as against the mid block made by polycondensation routes (resulting in polymer blocks with more polydisperse block lengths).

In formula (I) the moiety [(A-R¹-A-R²)ₙ]-A-R¹-A- forms the polymer mid block or backbone and, apart from the choice of R², may be substantially identical to known polymer mid blocks for soil release polymers. These are described in more detail below. For the advantages of the invention to be achieved, by hindering of the hydrolytic attack on ester bonds, the moieties A nearest to the PO blocks are esters. Without wishing to be bound by theory it is believed that the defined PO blocks adjacent to those end ester moieties hinder the hydrolysis of those ester moieties. The protection of those ester moieties has been found to provide a significant benefit in terms of overall polymer stability. This is thought to be due to the hydrolysis starting from the end of the mid block which immediately cleaves the functional EO end block from the mid block, fabric substantive, part of the polymer, if it occurs. This cleaving of the hydrophilic PEO end blocks (EO)_{q} from the fabric substantive (e.g. phenylene/alkylene containing) mid block reduces the soil release properties of the polymer.

According to a second aspect of the invention there is provided an alkaline detergent liquid comprising at least 10 wt% non soap surfactant and at least 1 wt% of the soil release polymer according to the first aspect of the invention, preferably the liquid has an undiluted pH of at least 7.4, more preferably at least 7.8. To obtain the benefit of the improved hydrolytic stability it is preferable that the alkaline detergent liquid has an undiluted pH of at most 9, preferably at most 8.4, even at most 8.2. The liquid may comprise at least 1 wt% triethanolamine.

### DETAILED DESCRIPTION OF THE INVENTION

All percentages are weight percent except where indicated otherwise or where the context makes it obvious that something else is intended.

The invention provides a stable high performance soil release polymer suitable for incorporation in alkaline concentrated detergent liquids, even in the presence of triethanolamine, and having the formula (I):

X-[(EO)_{q}-block-(PO)ₚ]-[(A-R¹-A-R²)ₙ-A-R¹-A-[(PO)ₚ-block-(EO)_{q}] -X (I)

X-[(EO)_{q}-block-(PO)ₚ]- and -[(PO)ₚ-block-(EO)_{q}] -X are generally connected at the ends of the polymer backbone or mid block. The mid block is responsible for making the polymer fabric substantive, particularly towards polyester fabrics. The endcaps of large blocks of EO groups are highly hydrophilic and can be considered to swing away from the fabric to provide the surface modification that promotes soil release. Thus it is an essential feature of the polymers of the present invention to have capped EO end block(s).

### Mid block or backbone

The linking moieties A are esters. In the polymer structure such an ester may be formed either way around and it may thus take the form of the moiety:

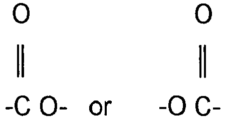

The R¹ moieties comprise 1,4-phenylene moieties.

The R² moieties are substituted ethylene moieties having C₁₋₄ alkyl substituents. A preferred substituted ethylene moiety is a mixture of 1,2 propylene which is derived from the condensation of 1,2 propane diol, and 2,3 butylene which is derived from the condensation of 2,3 butane diol.

The polymer should preferably be nonionic as ionic polymers are generally not phase stable in concentrated alkaline detergent liquids.

It has been found that the value of n needs to be at least 2 in order for the compounds of the present invention to have sufficient polyester substantivity. The maximum value for n is generally determined by the process by which the compound is made, but can range up to 26, i.e. the soil release agents of the present invention are oligomers or low molecular weight polymers. By comparison, polyesters used in fibre making typically have a much higher molecular weight with n from 50 to 250. Typically, n ranges from 2 to 16, preferably 4 to 9. Generally, the larger the n value, the less soluble is the polymer.

### End block

The polymer may have two end blocks, one on each end, or a single end block on one or the other end. The end block, when present, will link to a mid block ester moiety. The formulae given throughout the claims and description should be interpreted to include polymers having one or other variant of the single end block and polymers having two end blocks.

To obtain the combination of hydrolytic stability and soil release properties when stored in and delivered from an alkaline liquid the end block PO groups are arranged in blocks adjacent to the end ester moieties of the mid block and the end block EO groups are similarly arranged in blocks more remote from the mid block. Pure, i.e. 100%, EO and PO blocks are used. A preferred EO block is made using a capped PEG such as methyl capped PEG, or mPEG. The molecular weight Mw of the mPEG may be in the range 700 to 3000 Da.

The PO block consists of 100%, by number, PO units. The number, p, of units in the PO block is from 2 to 50, preferably from 5 to 45, more preferably from 6 to 40, yet more preferably from 7 to 40 and most preferably from 8 to 40, even from 11 to 35;

Preferred polymers have an EO block that has more units than the PO block, preferably the EO block has at least 1.5 times the number of moles or units (q) as the PO block (p).

The terminal end cap X on the EO block is preferably as small as possible, for example C₁-C₄ alkyl. X is preferably methyl, ethyl, or n-butyl and most preferably methyl or n-butyl.

q is at least 6, but is preferably at least 10. The value for q usually ranges from 18 to 80. Typically, the value for q is in the range of from 30 to 70, preferably 40 to 70.

As the value for q increases, the value for n should be increased so that the polymer will deposit well on the fabric during laundering.

Preferred compounds of the present invention are polymers having the formula (II):

X-[(OCH₂CH₂)_{q}-]-block-[(OCH₂CH(CH₃))ₚ]-[(OC(O)-R¹-C(O)O-R²)ₙ]-OC(O)-R¹-C(O)O-[((CH₃)CHCH₂O)ₚ-]-block-[(CH₂CH₂O)_{q}]-X (II)

wherein the R¹ moieties are all 1,4-phenylene moieties; the R² moieties are all substituted ethylene moieties, each X is C₁₋₄ alkyl, preferably methyl or n-butyl; each q is from 12 to 120; each p is from 2 to 50, preferably 6 to 40; and n is from 2 to 10.

The block polyesters of formula II are linear block polyesters. For these preferred linear block polyesters, n preferably ranges from 3 to 9, especially for those made from dimethyl terephthalate, and 1,2-propylene glycol. The most preferred of these linear block polyesters are those where n is from 3 to 5.
Most preferably, in the formula (II), in the polymer according to the present invention p is from 11 to 50 and q is from 18 to 60.

The soil release polymers of the present invention can be prepared by methods known to the person skilled in the art. US 4,702, 857 and US 4,711,730 describe a method of synthesis that may be adapted to produce the block polyesters of the present invention.

In a preferred process the end blocks are made in a separate process and then added to the mid block. A suitable process to manufacture the block copolymers used for the end blocks is described below.

### Manufacture of the end blocks

In a preferred process the end blocks are preformed by anionic polymerisation of propylene oxide using a preformed mono-functional PEG as the initiator. Such a process is, for example, described in M. I. Malik, B. Trathnigg, C.O. Kappe, Macromol. Chem. Phys., 2007, 208, 2510-2524.

The reaction scheme is set forth below:

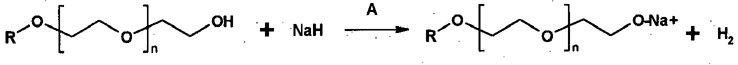

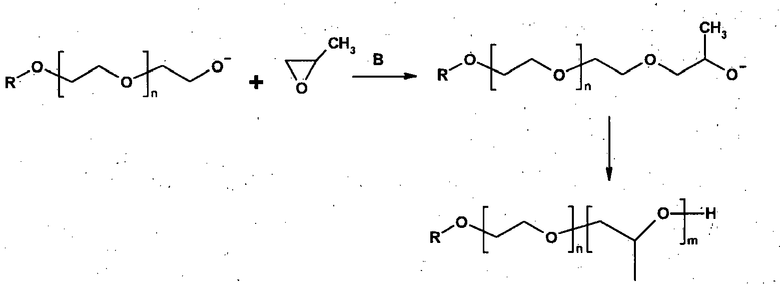

Reaction A: Sodium hydride reacts with PEG to yield activated chain ends. Reaction B: The addition of PO proceeds at the ends of the PEG chains to form a block of PO.

An alternative, but less controllable and therefore less preferred, process to construct the end blocks would be to take the mid block and react it with PO and mPEG.

### Mid block manufacture

It is preferred to manufacture the mid block by condensation of methyl esters of terephthalic acid with the appropriate aliphatic diol, preferably using an excess of one of them as set forth in more detail in the following examples. If the dicarboxylic acid is used in alkyl ester form, the reaction is suitably carried out in the presence of a base catalyst, at an elevated temperature, for example, 120 to 180 °C, and, if desired, under reduced pressure. The lower alcohol, normally methanol, generated during the reaction is distilled off.

Suitable catalysts include alkyl and alkaline earth metals, for example, lithium, sodium, calcium and magnesium, as well as transition and Group IIB metals, for example, antimony, manganese, cobalt and zinc. The catalysts are usually used as oxides, carbonates or acetates. A preferred catalyst comprises antimony trioxide and calcium acetate.

The esters and oligomers produced in the condensation (ester interchange) reaction may then be polymerised to the desired molecular weight, by raising the temperature further, typically to 180 to 250 °C.

The degree of polymerisation may be monitored by gel permeation chromatography, NMR, and end-group titrations.

However, it is also possible to obtain a very similar polyester recognition motif with the ester moieties reversed if the starting materials are aliphatic biscarboxylic acids and aromatic bisalcohol. For example, hydroquinone may be used as the aromatic alcohol and derivatives of succinic acid may be used as the carboxylic acid (in this case, R' and R" = H).

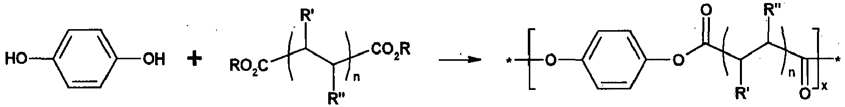

### Molecular weight

Preferred polymers for use in liquid detergent compositions have molecular weights Mw within the range of from 1000 to 20 000, preferably from 1500 to 10000.

The polydispersity of the polymers is preferred to be less than 3.

The polymers of the present invention are suitable for incorporation into alkaline liquid detergent compositions. The polymers may be incorporated into detergent compositions in amounts of from 0.3 to 15 wt%, preferably from 1 to 10 wt%, most preferably from 1.5 to 7 wt%.

The invention will now be further described with reference to the following nonlimiting examples.

### EXAMPLES

The 2,3-butandiol used was a mixture of the racemic and meso forms from Aldrich: B84904, 2,3-Butanediol, 98%, CAS no. 513-89-5.

### Soil Release (DMO) evaluation:

DMO is dirty motor oil. Soil release polymer was dissolved or dispersed in concentrated alkaline liquid detergent bases to make the concentrated alkaline liquid detergent compositions given in Table 1.
- MPG: is mono propylene glycol
- TEA: is triethanolamine
- Neodol 25-7: is nonionic (ex Shell) a C12-15 alcohol with 7 moles EO
- LAS acid: is C 12-14 linear alkylbenzene sulphonic acid
- Prifac ® 5908: is saturated lauric fatty acid ex Croda
- SLES 3EO: is sodium lauryl ether sulphate with 3 moles EO
- Empigen ® BB: is an alkyl betaine ex Huntsman
- EPEI: is Sokalan ® HP20 - PEI(600) 20EO ex BASF
- Perfume: is free oil perfume

**Table 1 - Liquid detergent compositions**

| | Composition A (5x) | Composition B (3x) |
|---|---|---|
| Component | Ingredient (as 100% active) % | |
| Demin water (initial - more added when pH is adjusted) | 27.85 | 45.91 |
| MPG | 20.00 | 20.00 |
| TEA | 2.00 | 1.14 |
| Neodol 25-7 | 12.74 | 7.28 |
| LAS acid | 8.49 | 4.85 |
| Prifac ® 5908 | 1.50 | 0.86 |
| SLES 3EO | 4.24 | 2.42 |
| Empigen ® BB | 1.50 | 0.86 |
| EPEI | 5.50 | 3.14 |
| Soil release polymer | 3.75 | 2.14 |
| Perfume | 2.43 | 1.39 |
| pH adjustment hole* | 10.00 | 10.00 |
| TOTAL | 100.00 | 100.00 |

| | | |
|---|---|---|
| * comprising NaOH (added from 47% solution) to required pH, and demineralised water balance. | | |

Essentially the 3x Composition B is a dilution of the 5x Composition A (i.e. the 5x ingredient percentage concentration x 20/35. A 5x composition is one designed to have a recommended dose per wash of 20ml; A 3x composition is one that has a recommended dose per wash of about 35ml. The exceptions to the scaling between Compositions A and B are the water level and the MPG hydrotrope level which was kept at 20% for both compositions.

The compositions, comprising the polymer, were stored to allow the polymer to be exposed to conditions where it may undergo hydrolysis, with consequent reduction of the soil release performance.

Thus whilst the theoretical level of polymer dosed to the wash is stated to be, say, 50ppm the actual level used after storage would have been lower due to polymer degradation during storage.

### Wash Method

All washes and pre-washes were carried out in a Tergotometer containing 1 litre of wash liquor at 25°C. Wash liquors were prepared using 26°FH water. The Tergotometer speed was set at 100 oscillations/minute for all pre-washes and washes.

Product concentration of composition in table 1 added to the wash liquor was 1.3g/l for Composition A (5x).

Two 30 minute pre-washes of knitted polyester test pieces were carried out with polyester and cotton ballast such that the total fabric weight was 40g and the ratio of cotton : polyester was 1:1. After each pre-wash the fabric was rinsed twice (for 20 seconds) in 26°FH water and dried. Fresh ballast was used for each pre-wash (and subsequent wash). After the polyester test pieces had dried, following the second pre-wash, they were stained using one drop of dirty motor oil (DMO) added from a disposable glass pipette. The stains were quickly stretched by hand in order to assist wicking and ensure a uniform stain, and left overnight before washing. Three replicate stained polyester test pieces were included in each wash; three repeat washes were carried out.

ΔE of the dried residual stain was measured (relative to clean unstained substrate, i.e. knitted polyester) using a Hunterlab Ultrascan XE reflectance spectrophotometer equipped with a UV filter at 420nm. Specular reflectance was included.

Examples 1 and 2 are two methods for synthesis of SRPs according to the invention. The two stage process of Example 1 is preferred due to the superior properties of the polymer produced.

### Example 1 Synthesis of PO block EO end-capped terephthalate/2,3 butandiol polyester SRP using a 2-stage reaction process

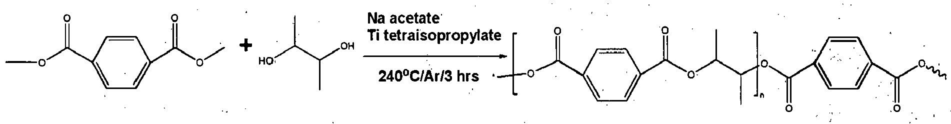

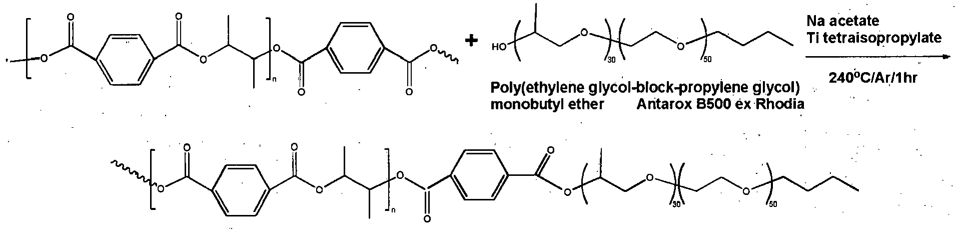

Using a 3-necked 100 ml round bottom flask fitted with a digital thermometer, argon inlet and bubbler connected to an air condenser, dimethylterephthalate (11.64g, 59.94 mmol) and 2,3 butandiol (10.80g, 119.89 mmol) were weighed into the flask, which also contained a magnetic stirrer bar. Also added were the condensation catalyst titanium tetraisopropylate (3 drops) and sodium acetate (2 small spatulas). The contents of the flask were heated under a constant stream of argon and constant stirring. When the temperature of the molten mixture in the flask reached 160°C, methanol was distilled off, indicating that polycondensation was occurring. Heating continued until the temperature of the mixture reached 240°C, which was held for 2.75 hours. The contents of the flask was then allowed to cool to about 140°C, at which point Antarox B500 (supplied by Rhodia) (11.99g, 5.99 mmol) was added to the flask and a further 3 drops of titanium tetraisopropylate. The mixture was reheated to 250°C and held at this temperature for 2.5 hours. The product was purified by sublimation to remove any residual dimethylterephthalate. Final yield = 18.9g.

¹H-NMR (D₂O) - Accelerated data in concentrated Laundry liquid Composition B buffered with TEA to pH 8 and held at 60°C for 8 days (using ¹H-NMR as the polymer stability tracking tool) has shown the polymer of example 1 to be hydrolytically stable.

TD-SEC (THF) - av Mₙ = 4,800; av M_{w} = 14,150; av PD = 2.95

### Example 2 - Synthesis of PO block EO end-capped terephthalate/2,3 butandiol polyester using a 1-stage reaction process

Using a 3-necked 100ml round bottom flask fitted with a digital thermometer, argon inlet and bubbler connected to an air condenser, dimethylterephthalate (11.64g, 59.94 mmol), 2,3 butandiol (10.80g, 119.89 mmol) and Antarox B500 (supplied by Rhodia) (11.99g, 5.99 mmol) were weighed into the flask, which also contained a magnetic stirrer bar. To the mixture was also added the condensation catalyst titanium tetraisopropylate (3 drops) and sodium acetate (2 small spatulas). The contents of the flask were heated under a constant stream of argon and constant stirring. When the temperature of the molten mixture in the flask reached 160°C, methanol was distilled off, indicating that polycondensation was occurring. Heating continued until the temperature of the mixture reached 240°C, which was held for 5 hours. The product was purified by sublimation to remove any residual dimethylterephthalate. Final yield = 19.7g. The product has the same structure as that produced for example 1, subject to the data below.

¹H-NMR (D₂O) -Accelerated data in concentrated Laundry liquid Composition B buffered with TEA to pH 8 and held at 60°C for 8 days (using ¹H-NMR as the polymer stability tracking tool) has shown the polymer of example 2 to be hydrolytically stable.

TD-SEC (THF) - av Mₙ = 3,700; av M_{w} = 4,150; av PD = 1.12

### Example 3 - Scale up of Example 1

To produce the polymer of example 3 we used the same synthetic procedure as for Example1 with the following:
DMT = 29.1 g, 149.86 mmol
2,3-Butanol = 27.0g, 299.72 mmol
Antarox = 29.98g, 14.99 mmol
Sodium acetate = 2 small spatulas
Titanium isopropoxide (1 st stage) = 3 drops
Titanium isopropoxide (2nd stage) = 3 drops
Yield = 54.2g

The polymer product of Example 3 was shown to have the structure shown for example 1. The polymer of example 3 was characterised:
TD-SEC (THF) - av Mₙ 2,700, av M_{w} = 3,100; av PD = 1.14

The polymer was included in concentrated Laundry liquid Composition B buffered with TEA to pH 8.1 and held at 60°C for 8 days. Using ¹H-NMR as the polymer stability tracking tool showed that this polymer was stable in alkaline detergent liquid.

### Example 4

The polymer produced in Example 3 was used in Composition A buffered to pH 6.7 in a full scale wash test in a Miele front loading automatic washing machine dosed at 1.3 g/L product (50ppm polymer). Controls were the same composition without polymer (water balance) (Table 2) and the same composition using the prior art Texcare® SRN170 polymer (Table 3).

**Table 2**

| **Prewash fatty stain data with base as the control** | | | |
|---|---|---|---|
| **Stain** | **Delta R** | **LSD95p** | **LSD95n** |
| MakeUp2-CSS3-kPES | 0.06 | 0.63 | -0.63 |
| YellowCurry-CSS3-kPES | 0.25 | 0.57 | -0.57 |
| W30D-PS16 | 0.29 | 0.43 | -0.43 |
| W30C-PS16 | 0.77 | 1.42 | -1.42 |
| C09-PS16 | 0.97 | 1.18 | -1.18 |
| BlackShoePolish-CSS3-kPES | 0.98 | 3.05 | -3.05 |
| W10M-PS16 | 1.02 | 1.55 | -1.55 |
| W20D-PS16 | 1.57 | 2.30 | -2.30 |
| E101-PS16 | 2.15 | 3.29 | -3.29 |
| GreenCurry-CSSS-kPES | 3.39 | 0.59 | -0.59 |
| Lipstick-CSS3-kPES | 4.72 | 179 | -1.79 |
| MechanicalGrease-CSS3-kPES | 5.40 | 2.37 | -2.37 |
| TomatoSunflowerOil-CSS3-kPES | 7.55 | 1.69 | -1.69 |
| DendeOil-CSS3-kPES | 7.65 | 0.52 | -0.52 |
| CookingOilVioletDye-CSS3-kPES | 9.28 | 0.56 | -0.56 |
| RedCurry-CSS3-kPES | 11.92 | 1.27 | -1.27 |
| RaguSunflowerOil-CSS3-kPES | 13.43 | 2.12 | -2.12 |
| LardVioletDye-CSS3-kPES | 15.85 | 3.14 | -3.14 |
| DirtyMotorOil-CSS3-kPES | 17.58 | 1.23 | -1.23 |
| RedPepperOilWater-CSS3-kPES | 23.66 | 1.46 | -1.46 |

**Table 3**

| **Prewash fatty stain data with Texcare®SRN170 as the control** | | | |
|---|---|---|---|
| **Stain** | **Delta R** | **LSD95p** | **LSD95n** |
| BlackShoePolish-CSS3-kPES | -8.07 | 3.05 | -3.05 |
| Lipstick-CSS3-kPES | -6.83 | 1.79 | -1.79 |
| DirtyMotorOil-CSS3-kPES | -4.43 | 1.23 | -1.23 |
| GreenCurry-CSS3-kPES | -0.46 | 0.59 | -0.59 |
| W20D-PS16 | -0.39 | 2.30 | -2.30 |
| W30C-PS16 | -0.32 | 1.42 | -1.42 |
| RaguSunflowerOil-CSS3-kPES | -0.25 | 2.12 | -2.12 |
| CookingOilVioletDye-CSS3-kPES | -0.09 | 0.56 | -0.56 |
| TomatoSunflowerOil-CSS3-kPES | -0.08 | 1.69 | -1.69 |
| YellowCurry-CSS3-kPES | -0.05 | 0.57 | -0.57 |
| DendeOil-CSS3-kPES | -0.03 | 0.52 | -0.52 |
| RedPepperOilWater-CSS3-kPES | -0.01 | 1.46 | -1.46 |
| W10M-PS16 | 0.00 | 1.55 | -1.55 |
| MakeUp2-CSS3-kPES | 0.00 | 0.63 | -0.63 |
| E101-PS16 | 0.03 | 3.29 | -3.29 |
| W30D-PS16 | 0.04 | 0.43 | -0.43 |
| RedCurry-CSS3-kPES | 0.05 | 1.27 | -1.27 |
| LardVioletDye-CSS3-kPES | 0.17 | 3.14 | -3.14 |
| C09-PS16 | 0.38 | 1.18 | -1.18 |
| MechanicalGrease-CSS3-kPES | 0.43 | 2.37 | -2.37 |

## Claims

1. A linear soil release polymer with the formula (I):
X-[(EO)_{q}-block-(PO)ₚ]-[(A-R¹-A-R²)ₙ]-A-R¹-A-[(PO)ₚ-block-(EO)_{q}] -X (I)
where the linking moieties A are esters,
where the R¹ moieties are 1,4 - phenylene moities , where the R² moieties are substituted ethylene moieties having C₁₋₄ alkyl substituents and the R² moieties comprise substituted ethylene moieties derived from the condensation of 2,3 butane diol,
where the EO blocks are 100% ethylene oxide (CH₂CH₂O),
where the PO blocks are 100% propylene oxide (CH₂CH(CH₃)O),
where p is a number from 2 to 50, preferably from 5 to 45, more preferably from 6 to 40, yet more preferably from 7 to 40 and most preferably from 8 to 40, even from 11 to 35;
where q is a number from 6 to 120, preferably 18 to 80, most preferably 40 to 70, provided that q is greater than p and preferably q is at least 1.5 times as large as p;
where X is a suitable capping moiety, preferably selected from C₁₋₄ alkyl, branched and unbranched;
where n is a number from 2 to 16.

2. A polymer according to claim 1 wherein the R² moieties consist entirely of substituted ethylene moieties, selected from 1,2 propylene which is derived from the condensation of 1,2 propane diol and 2,3 butylene which is derived from the condensation of 2,3 butane diol.

3. A polymer according to any preceding claim where n is a number from 3 to 16, preferably from 4 to 8.

4. A polymer according to any preceding claim in which the block EO is 100% EO, capped with a methyl group and formed from methyl capped PEG or mPEG with molecular weight Mw of the mPEG in the range 700 to 3000 Da.

5. A polymer according to any preceding claim wherein the EO block has more units than the PO block, preferably the EO block has at least 1.5 times the number of moles or units as the PO block.

6. A polymer according to any preceding claim with a molecular weight Mw from 1000 to 20 000, preferably from 1500 to 10 000.

7. A polymer according to any preceding claim with a polydispersity less than 3.

8. An alkaline detergent liquid comprising at least 10 wt% non soap surfactant and at least 1 wt% of the soil release polymer of any preceding claim, preferably the liquid has an undiluted pH of at least 7.4, more preferably at least 7.8.

9. An alkaline detergent liquid according to claim 8 comprising at least 10 wt% non soap surfactant and at least 1 wt% of the soil release polymer, wherein the liquid has an undiluted pH of at most 9, preferably at most 8.4, even at most 8.2.

10. An alkaline detergent liquid according to claim 8 or claim 9 further comprising at least 1 wt% triethanolamine.

## Patentansprüche

1. Schmutzlösendes Polymer der Formel (I)
X-[(EO)_{q}-Block-(PO)ₚ]-[(A-R¹-A-R²)ₙ]-A-R¹-A-[(PO)ₚ-Block-(EO)_{q}]-X (I)
wobei es sich bei den Verknüpfungsresten A um Ester handelt,
wobei es sich bei den R¹-Resten um 1,4-Phenylenreste handelt,
wobei es sich bei den R²-Resten um substituierte Ethylenreste mit C₁₋₄-Alkylsubstituenten handelt und die R²-Reste substituierte Ethylenreste umfassen, die durch Kondensation von 2,3-Butandiol entstanden sind.
wobei die EO-Blöcke zu 100 % aus Ethylenoxid (CH₂CH₂O) bestehen,
wobei die PO-Blöcke zu 100 % aus Propylenoxid (CH₂CH(CH₃)O) bestehen,
wobei p eine Zahl mit einem Wert von 2 bis 50, vorzugsweise von 5 bis 45, insbesondere von 6 bis 40, ganz besonders von 7 bis 40 und am meisten bevorzugt von 8 bis 40 und sogar von 11 bis 35 ist,
wobei q eine Zahl mit einem Wert von 6 bis 120, vorzugsweise von 18 bis 80 und insbesondere von 40 bis 70 ist, mit der Maßgabe, dass q größer als p ist und vorzugsweise q mindestens das 1,5-fache von p beträgt,
wobei X einen geeigneten Verkappungsrest bedeutet und vorzugsweise aus verzweigtem und unverzweigtem C₁₋₄-Alkyl ausgewählt ist,
wobei n eine Zahl mit einem Wert von 2 bis 16 bedeutet.

2. Polymer nach Anspruch 1, wobei die R²-Reste vollständig aus substituierten Ethylenresten bestehen, die aus 1,2-Propylen, das durch Kondensation von 1,2-Propandiol gebildet worden ist, und 2,3-Butylen, das durch Kondensation von 2,3-Butandiol gebildet worden ist, ausgewählt sind.

3. Polymer nach einem der vorstehenden Ansprüche, wobei n eine Zahl mit einem Wert von 3 bis 16 und vorzugsweise von 4 bis 8 bedeutet.

4. Polymer nach einem der vorstehenden Ansprüche, wobei der Block EO zu 100 % aus EO besteht, das mit einer Methylgruppe verkappt ist und aus methylverkapptem PEG oder mPEG mit einem Molekulargewicht des mPEG im Bereich von 700 bis 3000 Da gebildet ist.

5. Polymer nach einem der vorstehenden Ansprüche, wobei der EO-Block mehr Einheiten als der PO-Block aufweist und vorzugsweise der EO-Block mindestens 1,5 mal so viele Mole oder Einheiten wie der PO-Bock aufweist.

6. Polymer nach einem der vorstehenden Ansprüche mit einem Molekulargewicht Mw von 1000 bis 20 000 und vorzugsweise von 1500 bis 10 000.

7. Polymer nach einem der vorstehenden Ansprüche mit einer Polydispersität von weniger als 3.

8. Alkalische Waschmittelflüssigkeit, umfassend mindestens 10 Gew.-% Nichtseifen-Tensid und mindestens 1 Gew.-% des schmutzlösenden Polymers nach einem der vorstehenden Ansprüche, wobei die Flüssigkeit in unverdünntem Zustand vorzugsweise einen pH-Wert von mindestens 7,4 und insbesondere von mindestens 7,9 aufweist.

9. Alkalische Waschmittelflüssigkeit nach Anspruch 8, umfassend mindestens 10 Gew.-% Nichtseifen-Tensid und mindestens 1 Gew.-% des schmutzlösenden Polymers, wobei die Flüssigkeit in unverdünntem Zustand einen pH-Wert von mindestens 9, vorzugsweise von mindestens 8,4 und insbesondere von mindestens 8,2 aufweist.

10. Alkalische Waschmittelflüssigkeit nach Anspruch 8 oder Anspruch 9, ferner umfassend mindestens 1 Gew.-% Triethanolamin.

## Revendications

1. Polymère linéaire de libération de salissures avec la formule (I) :
X-[(EO)_{q}-séquence-(PO)ₚ]-[(A-R¹-A-R²)ₙ]-A-R¹-A-[(PO)ₚ-séquence-(EO)_{q}]-X (I)
dans laquelle les moitiés de liaison A sont des esters,
dans laquelle les moitiés R¹ sont des moitiés 1-4-phénylène,
dans laquelle les moitiés R² sont des moitiés éthylène substituées présentant des substituants alkyle en C₁₋₄ et les moitiés R² comprennent des moitiés éthylène substituées dérivées de la condensation de 2,3-butane diol,
dans laquelle les séquences EO sont 100 % d'oxyde d'éthylène (CH₂CH₂O),
dans laquelle les séquences PO sont 100 % d'oxyde de propylène (CH₂CH(CH₃)O),
dans laquelle p est un nombre de 2 à 50, de préférence de 5 à 45, encore mieux de 6 à 40, bien mieux encore de 7 à 40 et particulièrement de préférence de 8 à 40, même de 11 à 35 ;
dans laquelle q est un nombre de 6 à 120, de préférence de 18 à 80,
encore mieux de 40 à 70, à condition que q est supérieur à p et q est de préférence au moins 1,5 fois aussi grand que p ;
dans laquelle X est une moitié de coiffage appropriée, de préférence choisie parmi un groupe alkyle en C₁₋₄, ramifié et non ramifié ;
dans laquelle n est un nombre de 2 à 16.

2. Polymère selon la revendication 1, dans lequel les moitiés R² sont entièrement constituées de moitiés éthylène substituées, choisies parmi le 1,2-propylène qui est dérivé de la condensation de 1,2-propane diol et le 2,3-butylène qui est dérivé de la condensation de 2,3-butane diol.

3. Polymère selon l'une quelconque des revendications précédentes, dans lequel n est un nombre de 3 à 16, de préférence de 4 à 8.

4. Polymère selon l'une quelconque des revendications précédentes, dans lequel la séquence EO est 100 % d'EO, coiffée avec un groupe méthyle et constituée de PEG ou de mPEG coiffé avec un groupe méthyle avec une masse moléculaire Mw du mPEG dans l'intervalle de 700 à 3 000 Da.

5. Polymère selon l'une quelconque des revendications précédentes, dans lequel la séquence EO présente plus d'unités que la séquence PO, la séquence EO présente de préférence au moins 1,5 fois le nombre de moles ou d'unités de la séquence PO.

6. Polymère selon l'une quelconque des revendications précédentes avec une masse moléculaire Mw de 1 000 à 20 000, de préférence de 1 500 à 10 000.

7. Polymère selon l'une quelconque des revendications précédentes avec une polydispersité inférieure à 3.

8. Liquide de détergent alcalin comprenant au moins 10 % en poids de tensioactif de non-savon et au moins 1 % en poids du polymère de libération de salissures selon l'une quelconque des revendications précédentes, le liquide présente de préférence un pH non dilué d'au moins 7,4, encore mieux d'au moins 7,8.

9. Liquide de détergent alcalin selon la revendication 8 comprenant au moins 10 % en poids de tensioactif de non-savon et au moins 1 % en poids du polymère de libération de salissures, dans lequel le liquide présente un pH non dilué d'au plus 9, de préférence d'au plus 8,4, même d'au plus 8,2.

10. Liquide de détergent alcalin selon la revendication 8 ou la revendication 9 comprenant de plus au moins 1 % en poids de triéthanol-amine.
